# EUROPEAN PATENT APPLICATION

(11) **EP 4 008 799 A1**
(43) Date of publication of application: **08.06.2022**
(21) Application number: 20210962.5
(22) Date of filing: 01.12.2020
(51) Int. Cl.: C22B 11/08

(54) **PROCESS FOR GOLD AND/OR PLATINUM GROUP METALS HEAP LEACHING USING LIME**

(71) Applicant: S.A. Lhoist Recherche et Développement, 1342 Ottignies-Louvain-la-Neuve (BE)
(72) Inventor: DU PLESSIS, Chris, 1342 Ottignies-Louvain-la-Neuve (BE); LAMBERT, Hugues, 1342 Ottignies-Louvain-la-Neuve (BE); BALLARD, Deborah A., Forth Worth, TX 76135 (US)
(74) Representative: Calysta NV

(57) **Abstract**

Process for gold and/or platinum group metals heap leaching comprising irrigating a heap (1) with an irrigation solution (9, 10, 11 & 12) containing sodium cyanide for leaching gold and/or platinum group metals from said gold and/or platinum group metals containing ore where a lime reagent addition (B) by feeding a fine particle lime suspension containing lime particles in an aqueous phase is done in the irrigation solution.

## Description

### Technical Field

The present invention relates to a process for gold and/or platinum group metals heap leaching comprising the steps of:
(i) Stacking gold and/or platinum group metals containing ore on a collection means provided for retaining solid material and collecting a liquor, said stacking of gold and/or platinum group metals containing ore being provided to form a heap, said ore optionally containing dry quicklime added prior to or during heap stacking,
(ii) Irrigating said heap with an irrigation solution containing sodium cyanide by means of an irrigation means containing an irrigation pipe and irrigation emitters for irrigating said heap and leaching gold and/or platinum group metals from said gold and/or platinum group metals containing ore, forming a gold and/or platinum group metals pregnant liquor containing complexed gold and/or platinum group metals-cyanide dissolved in a liquid phase,
(iii) Collecting said gold and/or platinum group metals pregnant liquor,
(iv) Feeding a purification step where purification means are fed with said gold and/or platinum group metals pregnant liquor and separating said complexed gold and/or platinum group metals-cyanide from a barren solution containing said liquid phase substantially depleted in gold and/or platinum group metals-cyanide and
(v) Feeding said irrigation means with said barren solution.

### Background of the invention

Heap leaching and dump leaching are well-known metallurgical processing methods used to extract gold and/or platinum group metals. These leaching methods are most commonly used for low grade gold and/or platinum group metals ore (typically containing less than 1g gold and/or platinum group metals per metric ton of ore) where the contained gold and/or platinum group metals value does not warrant the increased cost of milling and subsequent use of tank leaching methods.

Stacked ore heaps vary in height from 6m to 20m, or more, and may contain several lifts. Heaps are typically constructed using run-of-mine ore (with a d₈₀ of 250 mm) or crushed-and-agglomerated ore (with a d₈₀ of 50 mm). The decision to crush ore is dependent upon the natural liberation of the ROM (run-of-mine) ore compared with crushed ore and takes into consideration the cost of crushing and its impact on the hydraulic percolation properties of a heap.

The notation d_{X} represents a diameter expressed in mm, compared to which the size of x% by volume of the particles measured are less than or equal to this diameter. For example, d₈₀ of 250 mm means that 80% by volume of the particles have a diameter smaller than or equal to 250 mm. The particle size distribution of a sample can be determined by different methods, known in the art, such as by classification.

The objective of heap leaching is to provide a relatively low-cost method of contacting cyanide solution with ore surfaces containing liberated gold and/or platinum group metals particles. A cyanide solution is irrigated onto the heap surface allowing it to flow via gravity though the ore channels and pores, acting as a lixiviant for gold and/or platinum group metals. Cyanide solution flow occurs as unsaturated percolation, meaning that flow channels and pores are not saturated with solution, thereby allowing air ingress carrying oxygen.

The following explanation will be given in the light of the phenomenon occurring with gold as illustrative explanation. Of course, the same is also applicable for platinum group metals by transposition of the explanation.

Oxygen is important to facilitate cyanide dissolution of gold according to the reaction (I) [and (I') in its ionic form] below. Dissolved gold-cyanide complex reports to the pregnant leach solution from which it can be recovered by carbon adsorption.

(I) 4 Au + 8 NaCN + 02 + 2H₂O → 4 Na[Au(CN)₂] + 4 NaOH

(I') 4 Au + 8 CN- + 02 + 2H₂O → 4 [Au(CN)₂]⁻ + 4OH⁻

The main relevant components of a typical gold heap leaching operation include:
- An ore processing and handling systems that may include crushing, conveying and ore stacking equipment or dump trucks used for this purpose.
- Ore agglomeration (if needed) to stabilise the finer size fractions.
- A lined heap leach pad and impermeable drainage collection apron to provide containment and recovery of the pregnant leach solution.
- Solution irrigation systems to apply the cyanide leach solution to the surface of the heap including pumps, piping and solution distribution systems and emitters.
- Solution collection system that includes a coarse drainage layer with network of solution collection pipes installed on the impermeable draining collection apron and an external solution collection system to route pregnant solution to the solution collection ponds.
- Solution collection ponds including pregnant, intermediate and barren solution ponds for collecting and managing the recirculation of solutions to the heap and as holding ponds, prior to pumping to metals recovery circuits. Intermediate ponds are used when very low concentration of leached gold-cyanide complex in the pregnant solution is collected from leached sections of the heap and is then sent to a high-grade zone to increase concentration, prior to metal recovery.
- Emergency ponds to collect solution arising from extreme events, such as design rainfall events or power outages.
- Reagent preparation and addition systems.

The solution circuit inventory (mass), in all the process components ranges from 12 to 20 w% with respect to the weight of the total ore tonnage. The solution inventory is mainly dependent on the hydraulic retention properties of the ore and, to a lesser extent, the size of holding ponds. The large inventory of solution makes it difficult to correct the pH in a short period of time, if it moves out of the operational target range.

As already noted, the cyanide lixiviant flows by percolation through the heap ore bed. Cyanide is mainly added to the solution in the form of sodium cyanide and at concentrations ranging from 200 - 600mg/dm³. Cyanide acts a lixiviant for gold in the presence of oxygen, where oxygen allows for oxidation of metallic gold (Au⁰) into monovalent gold, with which cyanide forms a stable soluble complex [(Au⁺)(CN⁻)₂]⁻ as shown in reaction (I) above. Cyanide leach solution is typically applied/irrigated onto the heap with drip irrigation emitters as is known in the art. Water and cyanide losses are minimized with drippers. These drippers are, however, prone to clogging if the solution contains particulates.

Alternatively, the cyanide leach solution is applied with sprinklers of various designs. Sprinklers are less prone to clogging than drip irrigation emitters but do result in increased losses of water and cyanide when compared to drip irrigation emitters, due to higher evaporations rates.

Most of the cyanide added is lost due to: (1) consumption by side-reactions (i.e. reactions that do not result in gold dissolution) or (2) remains unreacted or volatilized due to pH-dependent species conversion. These mechanisms are discussed in more detail:
(1) Cyanide is a very efficient lixiviant for other metals, in addition to gold, and forms stable complexes with metals over a wide range of Eh (measure of the redox (oxidation-reduction) state of a solution or, more exactly, its solutes) and pH. This feature of cyanide, combined with its high cost (relative to other lixiviants), often makes the use of cyanide uneconomic in the presence of other metal-containing minerals and induces a too high cyanide consumption. The presence of reactive iron sulfide minerals (such as pyrite, pyrrhotite, marcasite) and copper minerals are the main causes of high cyanide consumption via unwanted side-reaction formation of metal-cyano complexes and thiosulfate. Cyanide also reacts with sulfide-containing minerals such as pyrite, for example, via the reaction (II) below to form thiocyanate (SCN-).

   (II) 4 FeS₂ + 8 NaCN + 3 O₂ + 6 H₂O = 8 NaSCN + 4 Fe(OH)₃

   In addition to reacting with iron sulfide minerals, cyanide will also react with all major copper minerals in the approximate order: Azurite CuCO₃.Cu(OH)₂ > Malachite CuCO₃.Cu(OH)₂ > native copper Cu > Chalcocite Cu₂S > Bornite FeS.2Cu₂S.CuS > Enargite 3CuS.As₂S₅ > Tetrahedrite 4Cu₂S.Sb₂S₃ > Chrysocolla CuSiO₃ > Chalcopyrite CuFeS₂. Often these copper minerals are not present in economically valuable concentrations (i.e. for their copper value), but cause significant nuisance to gold recovery because of these side reactions with cyanide.
   Various other side-reactors with other minerals also occur resulting in metal-cyano complexes with Cu, Zn, Ni and Fe of which Fe(CN)₆^{4-/3-} and Cu(CN)₃²⁻ are common.
   Cyanide oxidation, catalysed by activated carbon, may also occur resulting in cyanate according to the below reaction (III):

   (III) 2CN⁻ + O₂ = 2CNO⁻

   Because of the array of side-reactions, the most commonly encountered species in gold heap leaching operations are: CN⁻, HCN, CNO⁻, SCN⁻, Zn(CN)₄²⁻, Ni(CN)₄²⁻, Fe(CN)₆³⁻, Cu(CN)²⁻, Cu(CN)₃²⁻, Cu(CN)₄³⁻. Quantifying the fate of cyanide in heap leaching circuits is particularly difficult because of the speciation and the physical complexity of the heap structure and flow patterns.
(2) In addition to the large number of species resulting from side-reactions (mentioned above), cyanide is also prone to pH-dependent speciation. Importantly, of these two species CN- is desirable for gold leaching, thus requiring the pH of the solution to be maintained preferably above pH 10.5 to enable the gold dissolution reaction. Below this pH, soluble cyanide, CN⁻, is converted to hydrogen cyanide (HCN) that is ineffective as a leaching agent and prone to volatilization as a highly toxic and hazardous gas. It should be noted that in highly saline solutions, due to high chloride concentrations, the equilibrium pH between HCN and CN⁻ is slightly shifted towards lower pH (i.e. equilibrium point shifted from pH 9.2 to approximately 8.2 in saline water containing approximately 20 g/dm³ of chloride).

Lime, used either directly as CaO or in hydrated form, Ca(OH)₂, is the most cost effective reagent to control pH in the optimal range for cyanidation gold leaching. Although other reagents, such as NaOH, can be used for pH control, lime has both cost and technical advantages over NaOH:
- Unlike calcium, sodium is not readily removed from the processing circuit and builds up in soluble form, if not deliberately bled from the solution circuit system.
- NaOH is prone to causing silica dissolution of gangue minerals. The dissolved silica then forms gel-like precipitates and scaling of equipment and activated carbon, causing significant process disruptions.

In some heap leaching operations, where alkalinity consumption is low, cement is used to provide alkalinity and as a binder for agglomerated ore. Cement has, however, a much lower capacity than lime to counter acid generation.

Gold heap leaching occurs typically over a period of several months, and in some cases, over years. Control of pH for optimal cyanidation is not a once-off adjustment, but requires continuous control due to reactions that consume lime. To ensure optimal pH for cyanidation, several lime-consuming reaction need to be countered during the duration of the leaching period, of which the following are examples:
- Acid generation from pyrite oxidation: The presence of pyrite, or other sulfide minerals, in the ore (in addition to consuming cyanide directly as illustrated earlier) results in acid generation when exposed to water and oxygen via the following reaction (IV), often also catalyzed by microbes:

   (IV) 4 FeS₂ + 15 O₂ + 8 H₂O = 2 Fe₂O₃ + 8 H₂SO₄
- The acid formed in this way reacts with lime according to reaction (V) (shown below in hydrated form):

   (V) Ca(OH)₂ + H₂SO₄ = CaSO₄.2H2O
- Buffering agents in solution: Magnesium is an abundant element contained in gangue ore minerals. Magnesium is solubilized at pH levels below 9.5 and particularly under acidic condition that may occur either in the bulk solution or in localized pore conditions as a result of acid-generating reactions. Once magnesium is in solution, usually with sulfate as the counter-anion, it buffers the pH and consumes alkali when upward control of pH is required. This soluble magnesium starts reacting with lime, via the reaction (VI), from pH 9.5 and continues to consume lime until a pH of 10.5:

   (VI) Ca(OH)2 + MgSO4 + 2 H2O = Mg(OH)2 + CaSO4.2H2O
- Carbonation reactions: Air ingress into heaps is important to supply oxygen for the cyanidation reaction, but air also contains CO₂. The CO₂ reactions with lime according to reaction (VII) to form carbonate, although this contributes a relatively small component of the total lime consumption:

   (VII) CO₂ + Ca(OH)₂ = CaCO₃ + H₂O

The most commonly used methods to introduce lime and other alkali reagents are direct addition of quicklime to ore or direct addition of slaked lime slurry to ore.

Direct addition to ore is the most commonly used method and is achieved either by adding dry quicklime (CaO), via a screw feeder from a silo to ore conveyors, or by dispensing onto ore on the back of dump trucks before such trucks tip the ore to stack the heap. Using this method, the quicklime is incorporated into the stacked ore bed. 1 to 3 kg of quicklime are typically added per metric ton of ore.

The bulk of the lime demand of the ore is estimated by the so-called bottle roll tests from a sample test of crushed ore and is added at the start of the process, with most lime being added to the ore during stacking. This method is convenient and relatively simple to apply, but does pose limitations.

Indeed, incorporating all or most of the quicklime into the ore at the start of the process is in contrast to the continued lime demand that occurs over the leaching period due to alkali consuming reactions. This causes a mismatch between the lime addition and the lime consumption requirement and makes optimal process pH control difficult. This strategy also limits the options for correcting the lime addition, if it turns out that too little lime was added to the ore to compensate for the lime consumption reactions over the duration of the leaching period.

Further, quicklime is added to the ore in a way that does not ensure optimal contact between the percolating solution and the quicklime added to the ore. Solution flow channels are uneven and often not well distributed, particularly with run-of-mine rather than crushed and agglomerated ore. This means that solution flow may by-pass quicklime-containing niches within the stacked ore bed, thereby reducing the utilization efficiency of the added quicklime.

Furthermore, the pH of the pregnant leach solution emanating from the bottom of a heap, has a lower pH than the irrigation solution applied to the surface because of the alkali consuming reactions within the heap. As leach solution percolates it encounters the cumulative alkali consuming demand of the ore. The further down the heap from the surface, the larger the ore mass it encounters and thus the larger the cumulative alkali consuming demand, thereby resulting in a pH gradient having an impact on the speciation of cyanide, resulting a significant reduction in the fraction of cyanide available in the desirable CN- species. The increasingly unfavorable speciation of cyanide, down the heap, is in addition to the overall consumption of cyanide by cyanide-consuming reactions. The net result is a decrease in cyanide efficiency and gold recovery.

As explained above, sometimes, a slaked lime slurry, i.e. suspension of Ca(OH)₂, is sprayed onto the ore as it is being stacked, as illustrated below. The slaked lime slurry is prepared in a dedicated mixing plant or slaking plant and pumped into a modified water truck which drives to the ore stacking area (either at the face on the lower lift or at the crest of the tipping face) and sprays the slaked lime slurry through a lance without fine control of the dosing rate and without control of the end location of the slaked lime slurry.

### Prior art

To compensate for the operational limitations that result from the use of lime added to the ore, as outlined, attempts have been made to remedy these issues.

A first attempt was sodium hydroxide addition to the cyanide irrigation solution: The use of NaOH is, however, problematic because of its relatively high cost (as is the case with all monovalent cation alkalis, relative to calcium hydroxide). Furthermore, high concentrations of NaOH are known to dissolve silica from the ores resulting in silicate fouling or formation of gelatinous precipitates in several locations. Its use is therefore very limited and, even when used, only contributes a small fraction of the total alkali demand of the heap leaching operation.

Another attempt was slaked lime addition to cyanide irrigation solution: An alternative to NaOH is the use of slaked lime, however the use of slaked lime is, itself, limited by the fact that slaked lime reagents contain inert impurities, such as silica or iron oxides, known as grits that do not dissolve in aqueous solution. The presence of these insoluble particles further causes blockages in the solution circuit and particularly to drip emitters, that contain an intricate labyrinth structure, becoming blocked by solid particles.

A further drawback resides in the fact that when dissolved gangue elements are present in a heap leaching circuit, the addition of slaked lime to the irrigation solution causes the precipitation reaction (VI above) with magnesium to occur, for example. In addition, the dissolution of silicate minerals increases particularly above pH 10 and subsequent formation of silica gel precipitates causes significant fouling in process circuit pipes, pumps, drip emitters and on activated carbon used for gold adsorption.

In summary, one of the main problems in gold heap leaching is less than optimum pH control of the heap which is caused by the inability of industrial practice to sufficiently modify the pH of the leach solution if the pH of the pregnant leach solution becomes too low, i.e. < 9.5. The lime demand of the heap is determined by bottle roll tests, as is known in the art. Theoretically the lime demand in heaps can be met mainly by a once-off lime addition during heap stacking with a limited amount of supplementary lime addition via irrigation solution. In practice, the lime added to the heap is not efficiently used and is not synchronized with the rate of consumption, thus resulting in pH gradients. The lack of pH control leads to the previously mentioned problems.

### Brief summary of the invention

It is the object of the invention to provide a process for gold and/or platinum group metals heap leaching where the pH control of the heap is improved, thereby facilitating optimal gold and/or platinum group metals dissolution by cyanide, keeping operational costs low and reducing the environmental impact.

To this end, it is provided according to the present invention a process for gold, or platinum group metals, heap leaching comprising the steps of:
(i) Stacking gold and/or platinum group metals-containing ore on a collection means provided for retaining solid material and collecting a liquor, said stacking of gold and/or platinum group metals containing ore being provided to form a heap, said ore optionally containing dry quicklime added prior to or during heap stacking,
(ii) Irrigating said heap with an irrigation solution containing sodium cyanide by means of an irrigation means containing an irrigation pipe and irrigation emitters for irrigating said heap and leaching gold and/or platinum group metals from said gold and/or platinum group metals containing ore, forming a gold and/or platinum group metals pregnant liquor containing gold and/or platinum group metals-cyanide dissolved in a liquid phase,
(iii) Collecting said gold and/or platinum group metals pregnant liquor,
(iv) Feeding a purification step where purification means are fed with said gold and/or platinum group metals pregnant liquor and separating (i.e. recovering) said complexed gold and/or platinum group metals-cyanide (for example by adsorption) from a barren solution containing said liquid phase substantially depleted in gold and/or platinum group metals-cyanide and
(v) Feeding said irrigation means with said barren solution.

The process according to the present invention is characterized in that it further comprises a lime reagent addition by forming a dispersed fine particle lime suspension containing Ca(OH)₂ particles in an aqueous phase where the Ca(OH)₂ particles have a d₉₇ smaller than or equal to 50 µm, preferably smaller than or equal to 30 µm and have a d₅₀ lower than or equal to 10 µm, preferably lower than or equal to 5 µm, and more preferably lower than or equal to 3 µm, said lime reagent addition being fed upstream or at the irrigation means and downstream of the collecting step of said gold and/or platinum group metals pregnant liquor and is dosed to achieve a Ca(OH)₂ concentration in the irrigation solution in the range of 0.1 to 3.5 g/dm³, more particularly in the range of 0.3 to 3.0 g/dm³, most preferably between 0.35 and 2.5 g/dm³ of irrigation solution.

Accordingly, the method according to the present invention is characterized by splitting the method of satisfying the lime demand of the ore during the leaching period, allowing for a portion (if any) of the lime demand to be satisfied by dry quicklime addition to the ore during stacking with the remainder of the demand satisfied via the irrigation emitters over the leaching period. The addition of the portion of lime demand, to be satisfied via solution irrigation, is achieved with lime reagent addition being fed upstream or at the irrigation means and downstream of the collecting step of said gold and/or platinum group metals pregnant liquor and is dosed to achieve a Ca(OH)₂ concentration in the irrigation solution in the range of 0.1 to 3.5 g/dm³, more particularly in the range of 0.3 to 3.0 g/dm³, most preferably between 0.35 and 2.5 g/dm³ of irrigation solution.

The lime reagent has suitable properties and is added, upstream of the irrigation emitters (or at the irrigation emitters) and downstream of the gold and/or platinum group metals-cyanide recovery step of said gold and/or platinum group metals pregnant liquor, in such a manner that it yields a dispersed fine particle lime suspension at the point of discharge through the irrigation emitters, containing Ca(OH)₂ particles in an aqueous phase where the Ca(OH)₂ particles have a d₉₇ smaller than or equal to 50 µm, to allow for remediation and modification of the pH in a heap during operation. Indeed, as the lime reagent addition is performed upstream or at the irrigation means and downstream of the collecting step of the gold and/or platinum group metals pregnant liquor, a substantial component, if not all, of the lime demand of the ore is met via the irrigation solution, potentially eliminating or reducing the dry quicklime addition added at the start of the process during heap stacking or substantially reducing the amount added at the start, or substantially being able to supplement the lime addition relative to the amount added during heap stacking.

The lime reagent addition via irrigation solution according to the present invention further enables control of the timing of lime addition in a way that allows for better control of the addition to meet the lime demand as a function of leaching time/stage and ensures optimal pH range in the heap. This, ultimately, resulting in reduced lime consumption, because of higher efficiency, reduced cyanide consumption and improved gold and/or platinum group metals recovery.

Further, the lime reagent addition is performed within the same solution flow path as cyanide, thereby assuring self-regulated proximity to the reaction location where required, in contrast to the lime added to the ore that may not be in proximity to cyanide in the leach solution.

The present invention allows lime reagent addition via irrigation solution to be added in a range of quantities, ranging from minimal addition to optimize pH control, to providing a substantial proportion of the overall lime demand, to providing all of the lime demand. Further, within the particle size distribution of the Ca(OH)₂ particles according to which d₉₇ is smaller than or equal to 50 µm, preferably smaller than or equal to 20 µm and d₅₀ is lower than or equal to 10 µm, preferably lower than or equal to 5 µm, and more preferably lower than or equal to 3 µm, the particle size distribution of the Ca(OH)₂ particles will preferably be adjusted dependent upon the type, configuration and aperture size of the solution emitters through which the irrigation solution is fed.

The reduction of the pH gradient effects down the heap, due to the lime reagent addition upstream or at the irrigation means and downstream of the collecting step of the gold and/or platinum group metals pregnant liquor, but also the better distribution of Ca(OH)₂, results in less gangue mineral dissolution causing precipitation effects on Ca(OH)₂ particle surfaces, less silica dissolution and less subsequent fouling effects in processing circuits.

According to the present invention, the lime reagent addition upstream or at the irrigation means and downstream of the collecting step of the gold and/or platinum group metals pregnant liquor gives the incoming feed enough buffering capacity in order to maintain a sufficiently high pH throughout the heap, without causing the problems highlighted.

In a preferred embodiment, said lime reagent in said lime reagent addition is a Ca(OH)₂ suspension having a concentration comprised between 10 and 550 g CaO equivalent/dm³, preferably between 100 and 550 g CaO equivalent/dm³, said lime reagent addition being made directly or via dilution tanks.

In another variant, said lime reagent is a powdery hydrated lime added into the irrigation pipes or in the optional pump forming an irrigation circuit forming, directly or via dilution tanks, forming when reaching the irrigation emitters, said dispersed fine particle lime suspension.

In another variant, said lime reagent is a powdery dry quicklime added into the irrigation pipes or in the optional pump forming an circuit, directly or via dilution tanks, or after passing through hydrocyclone to achieve a suitable particle size cut-off, forming when reaching the irrigation emitters, said dispersed particle lime suspension.

Preferably, said fine particle lime suspension contains a dispersant and or a viscosity modifier or stabilizer.

The dispersant and/or viscosity modifier/stabiliser additives used in the production of stable dispersed suspensions of milk of lime, unexpectedly, also have beneficial effects on the wettability of the ore meaning that the surface tensions of water is reduced thereby facilitating ingress into capillary pores. The increased wettability improves the contact of the cyanide and Ca(OH)₂ containing solution with ore surfaces thereby increasing gold and/or platinum group metals recovery.

Preferably, the dispersant and/or the viscosity modifier or stabiliser is chosen amongst carbohydrates, sugars, alcohol sugars, in particular sorbitol, carbon dioxide, phosphates, sulfates, bicarbonates, silicates, phosphonates, polyacrylates, polycarboxylic acids, low molecular weight organic acids, mixtures and derivatives thereof.

Typical dispersant is water-soluble polymer preferably having an active polycarboxylate ether concentration of at least 10 wt%, more preferably of at least 15 wt% and even more preferably of at least 20 wt%.

The viscosity modifier or stabilizer is typically an organic viscosity modifier or stabilizer agent in C₄ to C₁₈ bearing one or more hydroxyl group(s) like sugars contain typically either aldehyde (e.g. glucose and its di-, tri- and oligosaccharides) or ketone groups (e.g. fructose and its di-, tri or oligosaccharides)..

Examples of viscosity modifiers or stabilizers within the scope of the present invention are erythrose, threose, xylose, ribose, allose, glucose, galactose, fructose, mannose, sucrose, lactose, maltose, trehalose, starch, modified starch, hydrolysed starch, glycogen, inuline, modified inuline, cellulose, modified cellulose, pectins, dextrins and cyclodextrins, those glucides further classified into oligosaccharides or polysaccharides, according to their effective degree of polymerization, chitin, glucan, glycosaminoglucans, agar, pectin, xanthene gum, guar gum, carob, glucomannane, sorbitol or glucitol, erythritol, xylitol, lactitol, maltitol, glucosamine or oxided forms such as uronic acids (specifically galacturonic acid, glucuronic acid), gluconic acid, as well as the salts of these acids, originating from syrups and/or molasses derived from sugar cane, beets and chicory or in solid form, such as powder, in the form of a paste or as an aqueous or non-aqueous solution. They can be crystalline, semi-crystalline or amorphous.

Other examples of viscosity modifiers or stabilizers within the scope of the present invention are phosphonate or phosphonic acid selected from organophosphonic acids, either containing nitrogen or not, or salts thereof, more particularly from the group consisting of aminoalkylene polyphosphonic acids, wherein the alkylene radical contains from 1 to 20 carbon atoms, of hydroxyalkylidene polyphosphonic acids, wherein the alkylidene radical contains from 2 to 50 carbon atoms, phosphono-alkanepolycarboxylic acids, wherein the alkane group contains from 3 to 12 carbon atoms and wherein the molar ratio of the alkylphosphonic acid radical to the carboxylic acid radical is in the range from 1:2 to 1:4, derivatives thereof, such as salts thereof, and mixtures thereof.

Preferably, said phosphonate or phosphonic acid is selected from the group consisting of aminotris(methylenephosphonic) acid (ATMP), of 1-hydroxyethylidene-1,1-diphosphonic acid (HEDP), of ethylenediamine tetrakis(methylenephosphonic) acid (EDTMP), of hexamethylenediamine tetrakis(methylenephosphonic) acid (HDTMP), of diethylenetriamine pentakis(methylenephosphonic) acid (DTPMP), of (2-hydroxy)ethylamino-N, N-bis(methylenephosphonic) acid (HEMPA), of 2-phosphono-1,2,4-butanetricarboxylic acid (PBTC), of 6-amino-1-hydroxyhexylene-N,N-diphosphonic acid (neridronic acid), of N,N'-bis(3-aminopropyl)ethylenediamine hexakis(methylenephosphonic) acid, of bis(hexamethylenetriamine) pentakis(methylenephosphonic) acid, of aminotris(methylenephosphonic) acid oxide, derivatives thereof such as their salts of their mixtures.

Advantageously, in the process according to the present invention, said purification step comprises at least a step of contacting the gold and/or platinum group metals pregnant liquor with at least one carbon adsorption column during which the gold and/or platinum group metals-cyanide adsorbs onto a carbon-based adsorption material and the barren solution, from which gold and/or platinum group metals-cyanide has been substantially removed by the adsorption process, is collected with a flow-through fraction.

In a particular embodiment of the process according to the present invention, gold and/or platinum group metals-cyanide adsorbed on the carbon-based adsorption material is further eluted by a solution containing sodium/potassium hydroxide and cyanide, as is known in the art, to recover a gold and/or platinum group metals-containing fraction for further gold and/or platinum group metals refining steps, such as gold and/or platinum group metals electrowinning.

Advantageously, the process according to the present invention further comprises a regeneration step of the carbon-based adsorption material usually under the form of (1) an acid washing step (usually with dilute HCI or HNO₃), to remove mainly CaCO₃ precipitation and (2) a thermal regeneration step in which the activated carbon is heated (typically in the range of 650 - 950°C) under conditions where oxygen is excluded to avoid oxidation of the activated carbon, as that would reduce the surface area and therefor the adsorption capacity of the activated carbon.

Typically, as the adsorption performance of the activated carbon becomes reduced, the regeneration step is performed together with a replacement of a portion of the total activated carbon.

The regeneration of activated carbon is used as a mechanism to activated carbon that needs to be purchased, eventually supplemented by a partial replacement of the activated carbon, to lower the process costs.

In one embodiment, said barren solution feeding circulating in said irrigation means is further enriched by a sodium cyanide solution.

According to the present invention, the term "irrigation means" designate a means comprising an irrigation pipe and irrigation emitters in fluid communication with the irrigation pipe. The irrigation solution exits the irrigation means to reach the heap through the irrigation emitters. The wording "irrigation pipe" refers to either a single pipe or a piping network (association of several pipe segments, connected together), located between the carbon adsorption step and the heap. The irrigation pipe can be interrupted by an apparatus, a reservoir, a buffer, meaning that the irrigation pipe can contain in sequence a first segment of irrigation connected and in fluid communication with an entry of a tank for example and be followed by a further irrigation pipe connected to the outlet of the tank and so forth.

In a further embodiment according to the present invention, the irrigation solution feeds the heap by exiting the irrigation emitters, said irrigation emitters being sprinkling emitters or dripper emitters.

In yet a further embodiment according to the present invention, the lime reagent addition is fed at the irrigation pipe in which the barren solution circulates before reaching the irrigation emitters.

In a preferred embodiment, the barren solution leaves the carbon adsorption step and reaches a barren pond, where the barren solution will have a predetermined residence time. The barren solution is pumped by a barren pump for feeding the irrigation emitters. The barren solution accordingly circulates in sequence from the carbon adsorption device to a barren pond through a piping network, then it travels to the barren pump also through a piping network, before reaching the irrigation emitters. Each piping network can be made of a unique pipe segment or several pipe segments connected to each other. The irrigation pipe designates collectively all the elements between the carbon adsorption device and the irrigation emitters.

According to the present invention, as explained before, the lime reagent addition is fed upstream or at the irrigation means and downstream of the collecting step of said gold and/or platinum group metals pregnant liquor.

The lime reagent addition is accordingly in one embodiment fed in the irrigation pipe, i.e; downstream the carbon adsorption step and upstream the irrigation emitters, anywhere in the irrigation pipe. For example, the lime reagent addition can be performed in a segment between the barren pond and the barren pump, downstream the barren pump, at the barren pump, between the carbon adsorption outlet and the barren pond or even at the barren pond.

The preferred location for adding the fine particle lime suspension into the irrigation pipe, is into the solution pumped from the barren pond prior to discharge through the network of irrigations pipes delivering the solution to the heap surface. Addition can occur either before, with, or after cyanide addition.

In a particular embodiment of the present invention, the lime reagent addition is fed upstream the purification step. The lime reagent addition can be fed upstream the purification step as a unique addition point, for example in the collected gold and/or platinum group metals pregnant solution or can be fed downstream the purification step and upstream as a secondary feed for the lime reagent addition.

A part of the Ca(OH)₂ may indeed also be dosed into the pregnant solution pond, to optimize pH conditions for carbon adsorption, although the concentration of Ca(OH)₂ to this part of the circuit is limited due to the fact that too high pH conditions (>11) may negatively impact adsorption performance. In addition, particles of Ca(OH)₂ may accumulate in the activated carbon columns that may causes excessive carbonation reactions and increase acid consumption during the acid wash cycle in the process of activated carbon regeneration.

Other embodiments according to the present invention are mentioned in the appended claims.

Other characteristics and advantages of the present invention will be derived from the non-limitative following description, and by making reference to the drawings.

### Brief description of the Drawings

Figure 1 is a schematic chart showing the gold and/or platinum group metals heap leaching principle using the fine particle lime suspension containing lime particles in an aqueous phase according to the present invention.
Figure 2 is a schematic representation of alternative irrigation emitters.
Figure 3 is a graph showing the metal ion solubility depending on pH.
Figure 4 is a series of 3 graphs showing the gradient in the heap of respectively Ca(OH)₂, pH and cyanide fraction with respect to the depth from surface.

In the drawings, the same reference numbers have been allocated to the same or analogue element.

### Detailed description of an embodiment of the invention

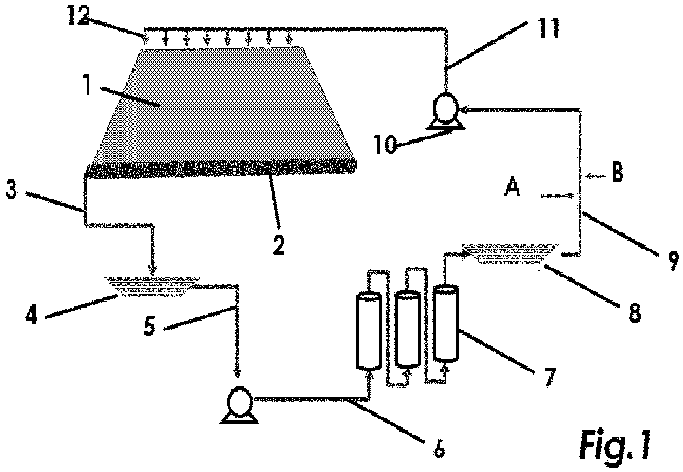

Figure 1 is a schematic chart showing the gold and/or platinum group metals heap leaching principle in a gold and/or platinum group metals heap leaching plant using the fine particle lime suspension containing lime particles in an aqueous phase according to the present invention.

The process for gold, or platinum group metals, heap leaching according to the present invention comprises a first step of stacking gold and/or platinum group metals containing ore on a collection means 2 provided for retaining solid material and collecting a liquor, said stacking of gold and/or platinum group metals containing ore being provided to form a heap 1, said ore optionally containing dry quicklime added prior to or during heap stacking

Upstream the gold and/or platinum group metals heap leaching plant, an ore processing and handling systems that may include crushing, conveying and ore stacking equipment or dump trucks can be present. Further the ore processing and handling systems can include ore agglomeration means (if needed) to stabilise the finer size fractions of the gold and/or platinum group metals containing ore.

The collection means 2 is preferably a lined heap leach pad and impermeable drainage collection apron to provide containment and recovery of the pregnant leach solution (liquor). In this case, the collection means 2 includes preferably a coarse drainage layer with network of solution collection pipes (not shown in figure 1) installed on the impermeable draining collection apron and an external solution collection system (not shown in the diagram)to route pregnant solution to the pregnant solution pond 4.

The gold and/or platinum group metals heap leaching plant comprises a solution irrigation means or system (9, 10, 11 & 12) to apply the cyanide leach solution to the surface of the heap 1 including pumps 10, irrigation pipe(s) 9, 11 and irrigation emitters, i.e. solution distribution systems and emitters 12.

The heap 1 is irrigated with an irrigation solution containing sodium cyanide for leaching gold and/or platinum group metals from said gold and/or platinum group metals containing ore, forming a gold and/or platinum group metals pregnant liquor3 containing gold and/or platinum group metals-cyanide dissolved in a liquid phase.

The gold and/or platinum group metals pregnant liquor 3 is collected in a pregnant solution pond 4. The pregnant solution pond 4 is connected by means of piping 5 & 6, typically with a pump 13 to purification means 7. The gold and/or platinum group metals pregnant liquor 3 is fed to a purification step. The purification means are fed with said gold and/or platinum group metals pregnant liquor and separate said complexed gold and/or platinum group metals-cyanide from a barren solution containing said liquid phase substantially depleted in gold and/or platinum group metals-cyanide. The barren solution is fed to a barren pond 8. The irrigation pipe(s) 9, 11 are connected to the irrigation emitters 12, eventually through a pump 10. The barren solution therefore feeds the irrigation means.

As already noted, the cyanide leach solution flows by percolation through the heap ore bed. Cyanide is mainly added to the solution in the form of sodium cyanide and at concentrations ranging from 200 - 600mg/dm³ (see addition point A). The cyanide addition can be performed anywhere between the barren pond 8 and the irrigation emitters 12 to enrich the barren solution from the barren solution pond 8.The purification step comprises at least a step of passing the gold and/or platinum group metals pregnant liquor 3 from the pregnant liquor barren 4 through piping 5 & 6, typically by means of a pump 13 on the purification means 7. The purification means 7 comprise at least one carbon adsorption column onto which gold and/or platinum group metals-cyanide adsorb on a carbon-based adsorption material and the barren solution (from which gold-cyanide complex has been removed) is sent to the barren solution pond 8. Gold and/or platinum group metals-cyanide adsorbed on the carbon-based adsorption material is further eluted by a solution containing sodium/potassium hydroxide and cyanide, as is known in the art, to recover a gold and/or platinum group metals-containing fraction for further gold and/or platinum group metals refining steps, such as gold and/or platinum group metals electrowinning (not illustrated).

In the process according to the present invention, a regeneration step of the carbon-based adsorption material is provided.

Lime reagent addition is performed in this preferred embodiment in location B, by feeding a lime reagent resulting in, or forming, a fine particle lime suspension by the time the particles reach the irrigation emitters containing lime particles in an aqueous phase where the lime particles have a d₉₇ smaller than or equal to 50 µm, preferably smaller than or equal to 30 µm and have a d₅₀ lower than or equal to 10 µm, preferably lower than or equal to 5 µm, and more preferably lower than or equal to 3 µm. The lime reagent addition being fed upstream or at the irrigation means (9, 10, 11 & 12) and downstream of the collecting step of said gold and/or platinum group metals pregnant liquor 3 and is dosed to achieve a Ca(OH)₂ concentration in the irrigation solution in the range of 0.1 to 3.5 g/dm³, more particularly in the range of 0.3 to 3.0 g/dm³, most preferably between 0.35 and 2.5 g/dm³ of irrigation solution.

Preferably the fine particle lime suspension contains a dispersant.

To determine the Ca(OH)₂ concentration in the irrigation solution, the first step is to determine the lime demand of the ore, using methods known in the art, including bottle roll tests, supplemented with laboratory column testing if required and determining the proportion of the total lime demand to be added as dry quicklime added to the ore during heap stacking and the proportion of lime demand to be added in the irrigation solution over the leaching period.

Pilot scale (6m tall, 30 cm diameter) column test work should preferably be conducted in advance of heap leaching operation to determine the efficacy of the selected lime addition proportions added during stacking relative to that added over time via the irrigation solution.

The combination of dry quicklime added during stacking and Ca(OH)₂ added via the irrigation solution can be used as method of providing a portion of the lime consumption demand (and thus coarse pH control) via dry quicklime addition during stacking and the remaining portion of the lime consumption demand as make-up lime (and thus finetune pH control) as Ca(OH)₂ via the irrigation solution.

A large proportion of the lime demand should be satisfied by lime reagent addition via the irrigation solution, thereby minimizing, or in eliminating, the amount of dry lime reagent co-added with the ore during heap stacking.

Lime addition is provided via the cyanide-containing irrigation solution to enable self-regulating proximity of lime to cyanide thereby ensuring adequately high pH at the point of cyanide lixiviant contact with gold and/or platinum group metals.

Based on the expected leaching time (to be determined by test work as is known in the art) required to achieve economically acceptable gold and/or platinum group metals recovery, heap height (i.e. ore mass per square metre of heap surface), irrigation rate, and pH of the pregnant leach solution, the optimal Ca(OH)₂ dose in the irrigation solution can be determined.

As said previously, the Ca(OH)₂ concentration in the irrigation solution can be applied in the range of 0.1 to 3.5 g/dm³, (expressed as grams of Ca(OH)₂ per litre) more particularly in the range of 0.3 to 3.0 g/dm³, most preferably between 0.35 and 2.5 g/dm³ of irrigation solution. The concentration should be adjusted to maintain the pH of the leach solution, emanating from the heap, above a pH setpoint, preferably 9.5. A process control feedback mechanism can be used for this purpose, as is known in the art, to link the Ca(OH)₂ concentration in the irrigation solution to the pH of the pregnant leach solution, while taking into account the lag time represented by the percolation time. The process control mechanism may either operate for an entire heap, sections of the heap to improve the resolution of control.

Maintaining the heap pH in this manner significantly reduces the negative impacts caused by the pH gradient effects referred to earlier. Cyanidation speciation is, for example, more efficient. This is partly due to improved cyanidation speciation and reduction in copper mineral dissolution in the heap.

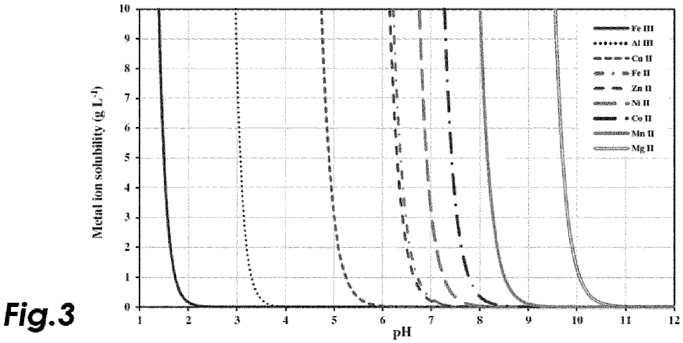

Gangue mineral dissolution is significantly reduced by managing the pH gradient in this manner, thereby inhibiting the precipitation of soluble elements, such as magnesium, at or after the lime addition point (see figure 3). Iron sulfide mineral dissolution (as from pyrite) is reduced at thus reducing the iron-cyanide complexation. Silica dissolution is also significantly reduced using the method according to the invention. While silica dissolution is conventionally believed to increase with hydroxyl concentration, the presence and preferably supersaturation of calcium, significantly reduces this effect due to the formation of calcium-silica-hydrates plombierite and tobermorite on gangue minerals, thereby reducing silica dissolution into the solution circuit. Importantly, this does not occur with the use of sodium hydroxide and in the absence of calcium.

The lower concentration of soluble elements in the solution circuit, also improves the operation of the activated carbon gold and/or platinum group metals-cyanide adsorption recovery process and reduces the formation of precipitates and coating effects on activated carbon.

Even at low concentration, i.e. below the 1.5 g/dm³ solubility limit of Ca(OH)₂, not all Ca(OH)₂ will be dissolved in the irrigation solution, due to slow dissolution kinetics. The Ca(OH)₂ reagent is explicitly dosed in fine dispersed particle suspension form, where the particle size of the colloids are smaller than 50 µm and preferably smaller than 20 µm in diameter, to avoid clogging of irrigation emitters.

It is beneficial to the process that fine Ca(OH)₂ particles are present and that Ca(OH)₂ is not fully dissolved, as undissolved Ca(OH)₂ particles do not directly participate in lime consuming reactions and are carried by solution flow to deeper levels within the heap. Instead it is dissolved Ca(OH)₂ that reacts with lime consuming reaction. The unreacted particles, carried downward by percolation flow, will then continuously supplement the dissolved Ca(OH)₂ concentration as lime consuming reactions occur and ensure a sufficient pH buffer in order to optimize cyanide speciation and gold and/or platinum group metals recovery.

The preferable location for adding the fine particle lime suspension into the circuit, is into the solution pumped from the barren pond prior to discharge through the network of irrigations pipes delivering the solution to the heap surface, as illustrated in the diagram. Addition can occur either before, with, or after cyanide addition. A part of the Ca(OH)₂ may also be dosed into the pregnant solution pond, to optimize pH conditions for carbon adsorption, although the concentration of Ca(OH)₂ to this part of the circuit is limited due to the fact that too high pH conditions (>11) may negatively impact adsorption performance. In addition, particles of Ca(OH)₂ may accumulate in the activated carbon columns that may causes excessive carbonation reactions and increase acid consumption during the acid wash cycle applied during activated carbon regeneration.

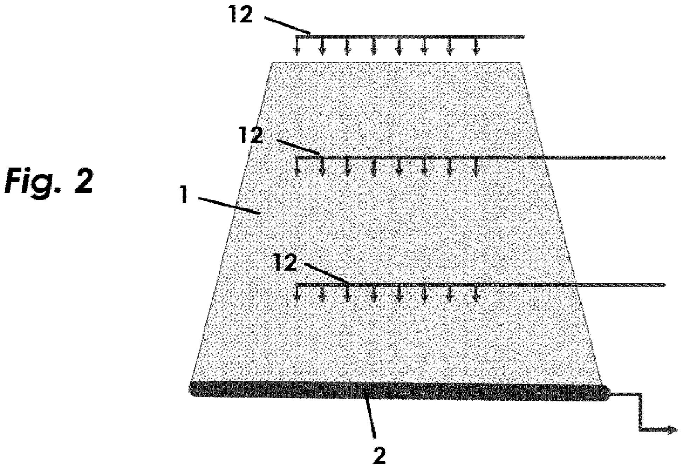

Figure 2 is a schematical representation of an alternative outlay of irrigation emitters, installed in layers within the heap in addition to the surface of the heap.

The method according to the present invention may also be deployed at multiple irrigation layers of heap lifts by means of several irrigation emitters 12, as illustrated in figure 2, rather than at a single location at the top of a heap 1.

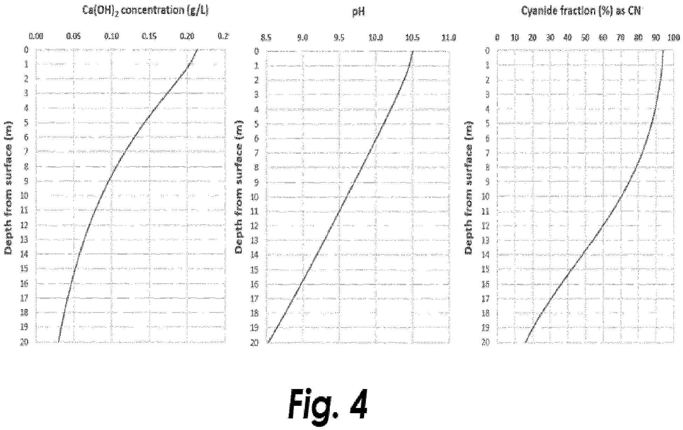

Figure 4 is a series of 3 graphs showing the gradient in the heap of respectively Ca(OH)₂, pH and cyanide fraction with respect to the depth from surface.

A general phenomenon of heap leaching is that the pH of the pregnant leach solution emanating from the bottom of a heap, has a lower pH than the irrigation solution applied to the surface. The reason for the pH gradient is because of the alkali consuming reactions within the heap. As solution percolates it encounters the cumulative alkali consuming demand of the ore. The further down the heap from the surface, the larger the ore mass it encounters and thus the larger the cumulative alkali consuming demand, thereby resulting in a pH gradient. The series of diagram of figure 4 shows an indicative scenario (often encountered at industrial operations) with a decreasing concentration of soluble Ca(OH)₂ down the heap, resulting in a pH gradient. This pH gradient also has an impact on the speciation of cyanide, resulting in a significant reduction in the fraction of cyanide available in the desirable, i.e. CN⁻, species. The increasingly unfavourable speciation of cyanide, down the heap, is in addition to the overall consumption of cyanide by cyanide consumption reactions. The net result is a decrease in cyanide efficiency and gold and/or platinum group metals recovery.

As explained earlier, according to the present invention, the concentration of Ca(OH)₂ is adjusted to maintain the pH of the leach solution, emanating from the heap, above a pH setpoint, preferably 9.5. Maintaining the heap pH in this manner significantly reduces the negative impacts caused by the pH gradient effects referred to earlier. Cyanidation speciation is, for example, more efficient. This is partly due to improved cyanidation speciation and reduction in copper mineral dissolution in the heap.

It should be understood that the present invention is not limited to the described embodiments and that variations can be applied without going outside of the scope of the claims.

## Claims

**1.** Process for gold, and platinum group metal, heap (1) leaching comprising the steps of:
(i) Stacking gold and/or platinum group metals containing ore on a collection means (2) provided for retaining solid material and collecting a liquor, said stacking of gold and/or platinum group metals containing ore being provided to form a heap (1), said ore optionally containing dry quicklime added prior to or during heap stacking,
(ii) Irrigating said heap (1) with an irrigation solution containing sodium cyanide by means of an irrigation means (9, 10, 11, 12) containing an irrigation pipe (9,11) and irrigation emitters (12) for irrigating said heap (1) and leaching gold and/or platinum group metals from said gold and/or platinum group metals containing ore, forming a gold and/or platinum group metals pregnant liquor containing complexed gold and/or platinum group metals-cyanide dissolved in a liquid phase,
(iii) Collecting said gold and/or platinum group metals pregnant liquor (3),
(iv) Feeding a purification step where purification means (7) are fed with said gold and/or platinum group metals pregnant liquor (3) and separating said complexed gold and/or platinum group metals-cyanide from a barren solution containing said liquid phase substantially depleted in gold and/or platinum group metals-cyanide and
(v) Feeding said irrigation means (9, 10, 11, 12) with said barren solution,
**characterized in that** said process further comprises a lime reagent addition by forming a dispersed fine particle lime suspension containing Ca(OH)₂ particles in an aqueous phase where the Ca(OH)₂ particles have a d₉₇ smaller than or equal to 50 µm, preferably smaller than or equal to 30 µm and have a d₅₀ lower than or equal to 10 µm, preferably lower than or equal to 5 µm, and more preferably lower than or equal to 3 µm, said lime reagent addition being fed upstream or at the irrigation means (9, 10, 11, 12) and downstream of the collecting step of said gold and/or platinum group metals pregnant liquor (3) and is dosed to achieve a Ca(OH)₂ concentration in the irrigation solution in the range of 0.1 to 3.5 g/dm³, more particularly in the range of 0.3 to 3.0 g/dm³, most preferably between 0.35 and 2.5 g/dm³ of irrigation solution, (expressed as grams of Ca(OH)₂ per litre).

**2.** Process for gold and/or platinum group metals heap leaching according to claim 1, wherein said lime reagent in said lime reagent addition is a Ca(OH)₂ suspension having a concentration comprised between 10 and 550 g CaO equivalent/dm³, preferably between 100 and 550 g CaO equivalent/dm³, said lime reagent addition being made directly or via dilution tanks.

**3.** Process for gold and/or platinum group metals heap leaching according to claim 1 or claim 2, wherein said lime reagent is a powdery hydrated lime added into the irrigation circuit (9, 10, 11) forming, directly or via dilution tanks, forming when reaching the irrigation emitters (12), said dispersed fine particle lime suspension.

**4.** Process for gold and/or platinum group metals heap leaching according to any of the claims 1 to 3, wherein said lime reagent is a powdery dry quicklime added into the irrigation circuit (9, 10, 11), directly or via dilution tanks, or after passing through hydrocyclone to achieve a suitable particle size cut-off, forming when reaching the irrigation emitters (12), said dispersed particle lime suspension

**5.** Process for gold and/or platinum group metals heap leaching according to any of the claims 1 to 4, wherein the said fine particle lime suspension contains a dispersant and/or a viscosity modifier.

**6.** Process for gold and/or platinum group metals heap leaching according to any of the preceding claims, wherein said purification step comprises at least a step of passing the gold and/or platinum group metals pregnant liquor (3° on at least one carbon adsorption column (7) during which gold and/or platinum group metals-cyanide adsorb on a carbon-based adsorption material and the barren solution is collected with a flow-through fraction.

**7.** Process for gold and/or platinum group metals heap leaching according to claim 6, wherein gold and/or platinum group metals-cyanide adsorbed on the carbon-based adsorption material is further eluted by a solution containing sodium/potassium hydroxide and cyanide to recover a gold and/or platinum group metals-containing fraction for further gold and/or platinum group metals refining steps, such as gold and/or platinum group metals electrowinning

**8.** Process for gold and/or platinum group metals heap leaching according to claim 6 or claim 7, further comprising the process according to the present invention further comprises a regeneration step of the carbon-based adsorption material.

**9.** Process for gold and/or platinum group metals heap leaching according to any of the preceding claims wherein said barren solution circulating in said irrigation means (9, 10, 11, 12) is further enriched by a sodium cyanide solution.

**10.** Process for gold and/or platinum group metals heap leaching according to any of the preceding claims wherein the irrigation solution feeds the heap by exiting the irrigation emitters (12), said irrigation emitters being sprinkling emitters (12) or dripper emitters (12).

**11.** Process for gold and/or platinum group metals heap leaching according to any of the preceding claims, wherein the lime reagent addition is fed at the irrigation pipe (9, 11) in which the barren solution circulates before reaching the irrigation emitters (12).

**11.** Process for gold and/or platinum group metals heap leaching according to any of the preceding claims, wherein the lime reagent addition is fed upstream or at the irrigation means (9, 10, 11, 12) and downstream of the collecting step of said gold and/or platinum group metals pregnant liquor (3).
